# EUROPÄISCHE PATENTSCHRIFT

(11) **EP 0 983 461 B1**
(45) Veröffentlichungstag und Bekanntmachung des Hinweises auf die Patenterteilung: **02.05.2003**
(21) Anmeldenummer: 98928313.0
(22) Anmeldetag: 22.05.1998
(51) Int. Cl.: F16L 37/00, F16L 37/12

(54) **SCHNELLANSCHLUSSKUPPLUNG**
QUICK-CONNECT COUPLING
ACCOUPLEMENT A CONNEXION RAPIDE

(30) Priorität: 22.05.1997 DE 29709040 U; 23.07.1997 DE 29713116 U
(43) Veröffentlichungstag der Anmeldung: 08.03.2000
(73) Patentinhaber: Weh, Erwin, D-89257 Illertissen (DE); WEH, Wolfgang, D-89257 Illertissen (DE)
(72) Erfinder: Weh, Erwin, D-89257 Illertissen (DE); WEH, Wolfgang, D-89257 Illertissen (DE)
(74) Vertreter: Fiener, Josef
(86) Internationale Anmeldenummer: EP9803048
(87) Internationale Veröffentlichungsnummer: WO98053239

(56) Entgegenhaltungen:
- EP-A- 0 039 977
- EP-A- 0 340 879
- EP-A- 0 521 800
- WO-A-89/00655
- WO-A-93/20378
- DE-A- 3 518 019

## Beschreibung

Die Erfindung betrifft eine Schnellanschlußkupplung für die Übertragung von gasförmigen und/oder flüssigen Fluiden, insbesondere zum Füllen von Gasbehältern.

Mit derartigen Schnellanschlußkupplungen soll eine sichere, dichte sowie schnell anschließbare Steckkupplung zum Übertragen eines Fluids von einer Druckquelle, beispielsweise von einer Nachfüllflasche oder einem Drucktank aus erreicht werden. Besonders wichtig ist hierbei die einfache, problemlose Bedienbarkeit der Schnellanschlußkupplung, so daß auch bei ungünstigen Bedingungen, wie gefährlichen Fluiden oder bei hohen Anschlußdrücken eine problemlose Handhabung ermöglicht wird.

Eine derartige Schnellanschlußkupplung ist in der EP-A-0 340 879 beschrieben, wobei die Schnellanschlußkupplung ein Gehäuse mit einem Fluideinlaß und einem Fluidauslaß aufweist, sowie mehrere Ventile vorgesehen sind, um eine sichere Abdichtung der Schnellanschlußkupplung bis zur vollständigen Herstellung der Verbindung zu gewährleisten. Diese Ventile werden dabei nach Ansetzen der Schnellanschlußkupplung in einer bestimmten vorgegebenen Reihenfolge geschaltet, wobei zuerst das Auslaßventil geöffnet wird, dann bei weiterer Bewegung eines Steuerungshebels die Spannzangen geschlossen werden und schließlich das Einlaßventil geöffnet wird. Der Steuerungshebel ist hierbei über eine Exzenterwelle mit der Schiebehülse für die Beaufschlagung der Spannzangen und mit einem zentralen Dichtkolben in Eingriff, der auch den Fluideinlaß nach erfolgtem Anschluß der Steckkupplung freigibt.

Obwohl hierdurch eine besonders sichere Anschlußmöglichkeit geschaffen wird, ist der Aufbau dieser Kupplung aufgrund der Vielzahl der Bauteile relativ aufwendig. Zudem ist die Handhabung relativ kompliziert, da neben dem Aufstecken der Kupplung das Betätigen des Steuerungshebels erforderlich ist, so daß eine Einhand-Bedienung kaum möglich ist.

Aus der WO-A-93/20378 des Anmelders ist weiterhin ein derartiger Schnellanschluß, insbesondere zum Füllen von Gasflaschen bekannt, wobei im Bereich des Auslasses eine Schnellanschlußvorrichtung in Form von Spannzangen mit einem Eingriffprofil vorgesehen ist. Hierbei ist auch ein in dem Kupplungsgehäuse gleitend verschiebbarer, hohler Dichtkolben beschrieben, der über eine mit einer Schiebehülse verbundenen Betätigungseinrichtung für das Schließen bzw. öffnen der Spannzangen verbunden ist. Auch hier ist die Handhabung dieses Schnellanschlusses verbesserungsfähig ist. Aus der EP 0 382 723 und der DE 35 18 019 des Anmelders sind weitere Steckkupplungen bekannt, bei denen ähnliche Nachteile gelten, insbesondere ein Schiefansetzen der Anschlußkupplung und damit deren öffnung mit Fluidfreigabe bei (noch) nicht vollständig hergestellter Dichtverbindung nicht vollkommen ausgeschlossen werden kann.

Demzufolge liegt der Erfindung die Aufgabe zugrunde, eine Schnellanschlußkupplung der eingangs genannten Art zu schaffen, die bei einfachem Aufbau eine besonders sichere und einfache Handhabung ermöglicht.

Diese Aufgabe wird gelöst durch eine Schnellanschlußkupplung gemäß den Merkmalen des Anspruches 1. Bevorzugte Weiterbildungen der Erfindung sind Gegenstand der Unteransprüche.

Die vorgeschlagene Schnellanschlußkupplung zeichnet sich durch eine einfache Bedienung aus, die zudem besonders sicher ist, da diese praktisch kraftfrei an- bzw. abgekuppelt werden kann. Die vorgeschlagene Schnellanschlußkupplung eignet sich für verschiedene Anschlüsse, insbesondere für Anschlußnippel von Gasbehältern und für Gasflaschenventile. Durch den im Gehäuse verschiebbaren bzw. teleskopierbaren Dichtkolben wird hierbei ein sicherer Eingriff der Verriegelungselemente, insbes. der Spannzangen ermöglicht, da sich durch die Verschiebbarkeit des Dichtkolbens das Eingriffsprofil der Spannzangen automatisch an die entsprechenden formschlüssigen Eingriffsprofile des Gegenanschlusses anpaßt und die Verriegelungselemente, insbesondere die Spannzangen unabhängig vom Dichtkolben verriegelt werden. Dies ist insbesondere deshalb wesentlich, da hierdurch der entsprechende Anschlußnippel, z. B. für einen Gasbehälter relativ einfach aufgebaut werden kann. Durch die Axialbeweglichkeit des Dichtkolbens ergibt sich zwischen dem Eingriffsprofil und der Abdichtfläche an der Stirnfläche der Schnellanschlußkupplung ein sicheres, dichtes Anlegen an den Anschluß und erst dann ein öffnen des damit gekoppelten Auslaßoder Rückschlagventils. Insbesondere wird dadurch ein übermäßiges Schiefansetzen der Kupplung vermieden bzw. der Benutzer zum sachgemäßen Ansetzen angehalten, da ansonsten sowohl das öffnen des Fluiddurchlasses als auch das Ankuppeln kupplungsseitig ausgeschlossen ist. Hierdurch wird auch ein Verschleiß oder eine Beschädigung des Anschlußprofiles sowohl kupplungs- als auch nippelseitig sicher vermieden.

Von besonderer Bedeutung ist auch die Realisierung der Schnellanschlußkupplung mittels einer äußeren Steuerhülse, bevorzugt für eine pneumatische Betätigung der Kupplung, so daß auf besonders einfache Weise eine sichere und schnelle Einhand-Bedienung der Schnellanschlußkupplung ermöglicht wird.

Nachfolgend wird ein Ausführungsbeispiel anhand der beiliegenden Zeichnungen näher erläutert und beschrieben. Hierin zeigen:
- Fig. 1: eine Seitenansicht einer Schnellanschlußkupplung für einen Anschlußnippel als Anschluß, wobei die Schnellanschlußkupplung im Längs-Halbschnitt und in der Anschlußstellung dargestellt ist;
- Fig. 2: eine abgewandelte Ausführungsform der Schnellanschlußkupplung, ebenfalls in Anschlußstellung;
- Fig. 3: eine weitere Ausführungsform der Schnellanschlußkupplung vor dem Anschluß; und
- Fig. 4: die Schnellanschlußkupplung gemäß Fig. 3 in der Anschlußstellung.

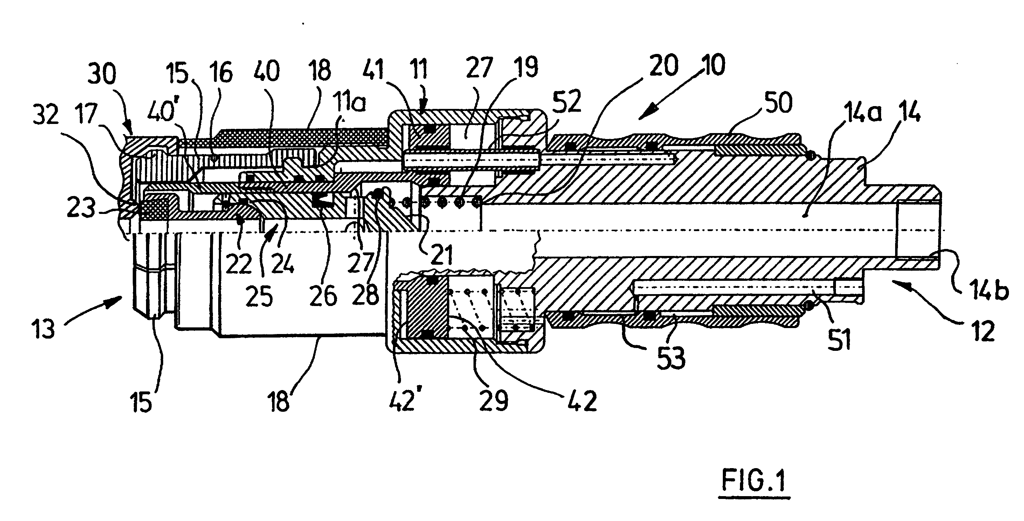

In Fig. 1 ist ein bevorzugtes Ausführungsbeispiel einer Schnellanschlußkupplung 10 mit Ankupplung an einen nur teilweise dargestellten Gegenanschluß 30 in Form eines Nippels gezeigt. Die Schnellanschlußkupplung 10 weist ein rohrförmiges Gehäuse 11 auf, wobei hier die rechte Stirnseite als Einlaß 12 dient und die linke Stirnseite als Auslaß 13 für die Weiterleitung des zu übertragenden Fluids an den Anschlußnippel 30. Der Einlaß 12 zu dem Gehäuse 11 weist einen rohrförmigen Anschlußadapter 14 auf, der in das Gehäuse 11 eingeschraubt ist und einen Durchlaß 14a in Form einer zentralen Bohrung aufweist. Der Anschlußadapter 14 weist an seinem hier rechten Ende zudem ein Gewinde 14b auf, an das ein Schlauch oder eine Rohrleitung zur Zuführung des zu übertragenden Fluids angeschlossen werden kann. Der Anschlußadapter 14 kann hierbei in Anpassung an das zu übertragende Fluid, insbesondere an die jeweils gewünschten Zuführwinkel, Durchlaßquerschnitte usw. gestaltet sein.

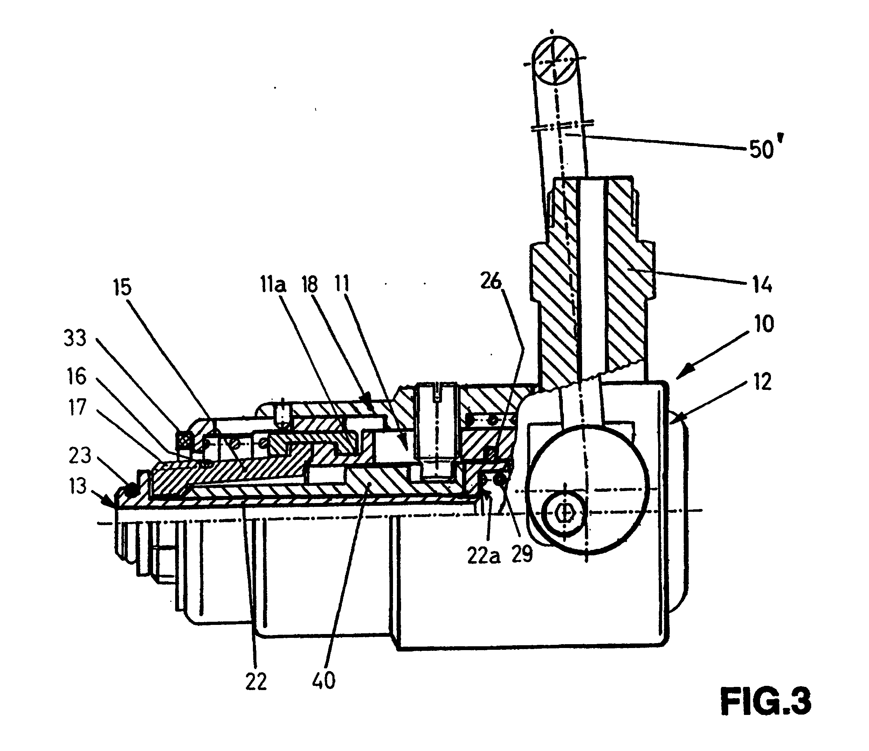

Auf der dem Anschlußadapter 14 gegenüberliegenden Stirnseite des Gehäuses 11, nämlich dem Auslaß 13, sind mehrere Verriegelungselemente in Form von länglichen Spannzangen 15 vorgesehen, die in der hier nicht dargestellten Stellung vor dem Einstecken in den Anschluß 30 radial nach innen gespreizt sind. Die länglichen Spannzangen 15, von denen um das Gehäuse 11 herum wenigstens drei, im allgemeinen sechs Spannzangen angeordnet sind, sind an ihrem hier rechten Ende an einer Ringnut 11a des Gehäuses 11 eingehängt und dabei durch eine Ringfeder 16 vorgespannt, so daß die Spannzangen 15 radial nach innen gespreizt werden (vgl. auch Fig. 3). An dem hier linken Ende an der nach außen abgekröpftem Fläche weisen die Spannzangen 15 jeweils korrespondierend zu dem hakenförmigen Anschlußprofil 31 des Anschlusses 30 ausgebildete formschlüssige Eingriffsprofile 17 auf.

Um die Spannzangen 15 herum ist eine äußere Hülse 18, bevorzugt aus Kunststoff oder Gummi vorgesehen, die an dem zylindrischen Außenmantel des Gehäuses 11 geführt ist. An der zum Auslaß 13 hin gelegenen Stirnfläche des Gehäuses 11 ist ein bevorzugt mittels eines Kugelgelenkes allseitig schwenkbeweglicher Dichtkolben 22 vorgesehen, der an seiner vorderen Stirnseite einen Dichtring 23 zur Anlage an einer spitz ausgeführten Dichtfläche 32 des Anschlußnippels 30 aufweist. Der Dichtkolben 22 ist mittels eines eingesetzten Dichtungsringes 24 abgedichtet, so daß das im wesentlichen entlang der Zentralachse der Steckanschlußkupplung 10 strömende gasförmige und/oder flüssige Fluid nicht nach außen hin austreten kann. Im Strömungsweg entlang des Durchlasses 14a ist zudem eine Druckfeder 19, die in Richtung des Anschlußnippels 30 vorgespannt ist, angeordnet. Die Druckfeder 19 stützt sich hierbei über einen Absatz 20 an dem Anschlußadapter 14 gegen einen Ventilkegel 21 eines Rückschlagventils 25 ab.

Von Bedeutung ist hierbei, daß das in Fortsetzung des Dichtkolbens 22 zentral an einem Ventilschaft gelagerte Rückschlagventil 25 mit dem Ventilkegel 21 mittels eines Dichtringes 28 gegenüber einer Dichtfläche 27 an einer Ringoder Schiebehülse 40 in geschlossener Stellung abdichtet. Das Rückschlagventil 25 ist hierbei von der Druckfeder 19 beaufschlagt, die mittels des Absatzes 20 im Anschlußadapter 14 gelagert ist und sich gegen letzteren abstützt. Durch dieses Rückschlagventil 25 und den damit gekoppelten Dichtkolben 22 wird sichergestellt, daß in der abgekuppelten Position bzw. bis kurz vor dem Anschluß der Schnellanschlußkupplung 10 an den Anschlußnippel 30 das durch den Anschlußadapter 14 zugeführte Fluid auch bei geöffneten Anschlußhahn an der Nachfüllflasche oder dergleichen nicht ausströmen kann.

Das Rückschlagventil 25 weist einen zentral angeordneten, zum Auslaß 13 hin weisenden Durchlaß in Fortsetzung des Durchlasses 14a auf. Nach vollständigem Anschluß der Schnellanschlußkupplung 10 mit formschlüssiger Verriegelung der Spannzangen 15 durch die Schiebehülse 40 bzw. ein darauf stirnseitig aufgeschraubtes Kopfstück 40' gegenüber dem Anschlußnippel 30 wirkt dieser Durchlaß mit dem Durchlaß 14a zusammen, wobei beim Anschließen das Rückschlagventil 25 mit den Dichtflächen 27/28 in Offenstellung gedrückt wird.

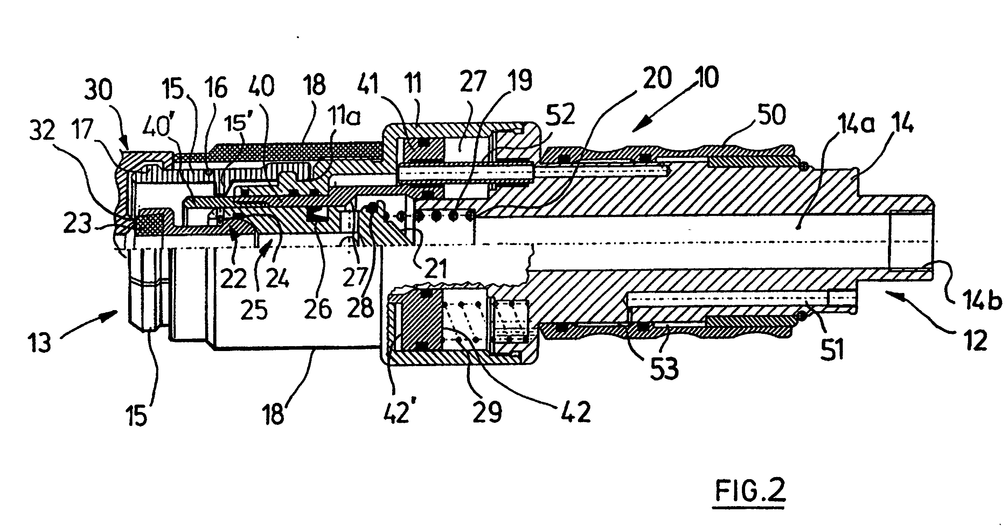

Von besonderer Bedeutung ist hierbei die am Außenumfang des Dichtkolbens 22 und des Rückschlagventils 25 geführte Ring- oder Schiebehülse 40, die von wenigstens einer Druckfeder 29, bevorzugt in einem Druckraum 27, innerhalb des Gehäuses 11 beaufschlagt ist. Die Druckfeder 29 (vgl. auch Fig. 3) stützt sich hierbei an einer Vertiefung des Gehäuses 11 bzw. des Anschlußadapters 14 ab. Wie aus der Darstellung ersichtlich, greift die zum Auslaß 13 hin weisende, spitz ausgebildete Seite der Schiebehülse 40 bzw. das darauf aufgeschraubte Kopfstück 40' an der Innenfläche ( 15' in Fig. 2) der Spannzangen 15 an, wodurch diese in ihrer radial aufgespreizten Verriegelungsstellung gehalten werden. Die Schiebehülse 40 wird hierbei von der Druckfeder 29 bis zu dem nach innen hin abgekröpftem Bereich des Gehäuses 11 geschoben, wodurch zugleich ein Anschlag der Verschiebebewegung der Schiebehülse 40 erreicht wird. Da der Dichtkolben 22 mit dem Rückschlagventil 25 in der Schiebehülse 40 verschiebbar gelagert ist, kann je nach Eingriffsbedingungen das Eingriffsprofil 17 in das gegenüberliegende Profil 31 des Anschlußnippels 30 mit besonders geringer Kupplungskraft eingreifen. Im allgemeinen reicht dazu bereits die Federkraft der Druckfedern 29 aus, um durch axiale Verschiebung der Schiebehülse 40 mit dem darin gelagerten Dichtkolben 22 die hier dargestellte Anschlußstellung mit Verriegelung der Verriegelungselemente, insbesondere der Spannzangen 15 in unabhängiger Weise sicherzustellen.

Zur weiteren Erleichterung gegenüber der manuellen Betätigung der Schiebehülse 40 zum An- bzw. Abkuppeln, beispielsweise mit einem Handhebel gemäß der eingangs genannten DE 35 18 019 oder einem Exzenterhebel gemäß der EP-A- 0 340 879, kann auch eine pneumatische Unterstützung mittels einer Betätigungsvorrichtung 50, einem Luftkanal 51, einer Luftzuführungshülse 52 und zwei Ringkanälen 53 vorgesehen sein. Durch axiale Bewegung der Betätigungsvorrichtung 50 wird der Luftkanal 51 gegenüber der hier dargestellten Position über die Ringkanäle 53 mit der Luftzuführungshülse 52 verbunden, so daß eine Kolbenfläche 42' an einem Kolben 41 der Schiebehülse 40 beaufschlagt und dadurch diese zurückgezogen wird. Zur Erhöhung der Verschiebekraft der Schiebehülse 40 in die Verriegelungsstellung, ergänzend zu den Druckfedern 29, kann im Druckraum 27 innerhalb des Gehäuses 11 auch eine durchmessergrößere Kolben-Ringfläche 42 (entsprechend der Kolbenfläche 22a in Fig. 3) am Kolben 41 ausgebildet sein.

In Fig. 2 ist die Schnellanschlußkupplung 10 in einer abgewandelten Ausführung dargestellt, wobei bei ansonsten gleichen Bezugsziffern für gleiche Bauteile das Kopfstück 40' der Schiebehülse 40, die auch einstückig ausgebildet sein kann, etwas kürzer ausgebildet ist. Hierdurch wird eine größere Schwenkbeweglichkeit des Dichtkolbens 22 erreicht, wobei dieser auch einstückig bzw. starr mit dem Ventilschaft der Rückschlagventils 25 ausgebildet sein kann. Hierbei kann auch die Außenmantelfläche des Dichtkolbens 22 oder der Ventilschaft des Rückschlagventils 25 unmittelbar zur Verriegelung der Spannzangen 15 an deren hier abgekröpfen Innenfläche 15' anliegen und zur Verriegelung dienen. Wie ersichtlich, wird beim Ein- bzw. Aufstecken der Schnellanschlußkupplung 10 in bzw. auf den Anschluß 30 der stirnseitige Dichtring 23 am Dichtkolben 22 mit dem Anschluß 30 in Berührung gebracht. Dabei gelangt der Dichtring 23 in fester Anlage zu der Dichtfläche 32, bevor das Rückschlagventil 25 an der Dichtfläche 27/28 öffnen kann, wodurch ein Austreten von Fluid, das an dem Ventilkegel 21 des Rückschlagventils 25 kupplungsseitig ansteht, vermieden wird. Durch die Anlage des Dichtringes 23 an der Dichtfläche 32 wird zudem der Dichtkolben 22 nach rechts in die Offenstellung verschoben, wobei jedoch bereits die Schiebehülse 40 bzw. deren Kopfstück 40' oder die Außenmantelfläche des Dichtkolbens 22 bzw. der Ventilschaft des Rückschlagventils 25 die Spannzangen 15 an deren Innenfläche 15' berührt und in der Verriegelungsstellung aufgespreizt hält.

Es sei darauf hingewiesen, daß bei dieser Ankuppelbewegung der Dichtkolben 22 zusammen mit dem Schiebehülse 40 gegen die Federkraft der Druckfeder 19 zunächst nach rechts verschoben wird, wobei das Rückschlagventil 25 noch geschlossen ist. Nach einem geringen Weg von einigen Millimetern werden die an der Außenfläche der Schiebehülse 40 oder allgemein des Dichtkolbens 22 anliegenden Innenflächen 15' der Spannzangen 15 in ihre Sperrstellung gespreizt, so daß das Eingriffsprofil 17 an dem korrespondierend ausgebildeten Anschlußprofil 31 des Anschlußnippels 30 eingreift. Hierdurch wird praktisch zeitgleich die Schiebehülse 40 für die axiale Bewegung nach links frei, da die Schiebehülse 40 auch von der Druckfeder 29 beaufschlagt wird. Durch diese Axialbewegung der Schiebehülse 40 und/oder des Dichtkolbens 22 greift diese(-r) an den Innenflächen 15' der Spannzangen 15 in Art eines Kragens an, so daß diese in ihrer aufgespreizten Eingriffsstellung am Anschluß 30 formschlüssig gehalten werden.

Es sei darauf hingewiesen, daß in der hier in Fig. 2 dargestellten Anschlußstellung der Dichtkolben 22 noch geringfügig schwenkbeweglich ist. Von Bedeutung ist hierbei auch die Fläche am Ventilkolben 21, die eine größere wirksame Fläche als im Bereich der Berührungsfläche zwischen dem Dichtring 23 und der Dichtfläche 32 aufweist. Hierdurch wird sichergestellt, daß gemäß der Fluidströmung im wesentlichen entlang der Zentralachse der Schnellanschlußkupplung 10 der Dichtkolben 22 mit seinem Dichtring 23 mit steigendem Druck auch stärker gegen die Dichtfläche 32 angedrückt wird. Hierdurch wird eine Servowirkung, d. h. eine stärkere Anpresskraft des Dichtringes 23 mit steigendem Fluiddruck und damit eine besonders zuverlässige Abdichtung der Schnellanschlußkupplung 10 erreicht.

Zum Lösen der Schnellanschlußkupplung 10 und damit dem Zurückführen der in Fig. 2 dargestellten Anschlußstellung in die öffnungsstellung wird hier die Betätigungshülse 50 an einer Profilierung an der Außenfläche per Hand zurückgezogen. Nach dieser bevorzugten pneumatischen Verschiebung (oder mittels eines Hebels) mit Zurückziehen der Schiebehülse 40 um einen kurzen Weg (entsprechend der Länge des Druckraumes 27) können die Spannzangen 15 sich wieder radial nach innen (bzw. bei einem Außenanschluß mit außenseitiger Spannzangenlagerung nach außen) spreizen, wobei simultan das Rückschlagventil 25 innerhalb der Schiebehülse 40 unter der Wirkung der Druckfeder 19 hier nach links zum Auslaßende 13 hin verschoben wird. Bevor sich somit der Dichtkontakt zwischen dem Dichtkolben 22 und der Dichtfläche 32 löst, wird aufgrund der Axialbeweglichkeit des Ventilstößels des Rückschlagventils 25 die Dichtfläche 27/28 das Rückschlagventil 25 geschlossen. Durch diese praktisch gleichzeitige Abfolge wird ein sehr schnelles Schließen des Rückschlagventiles 25 erreicht, so daß kein Fluidvolumen austreten kann.

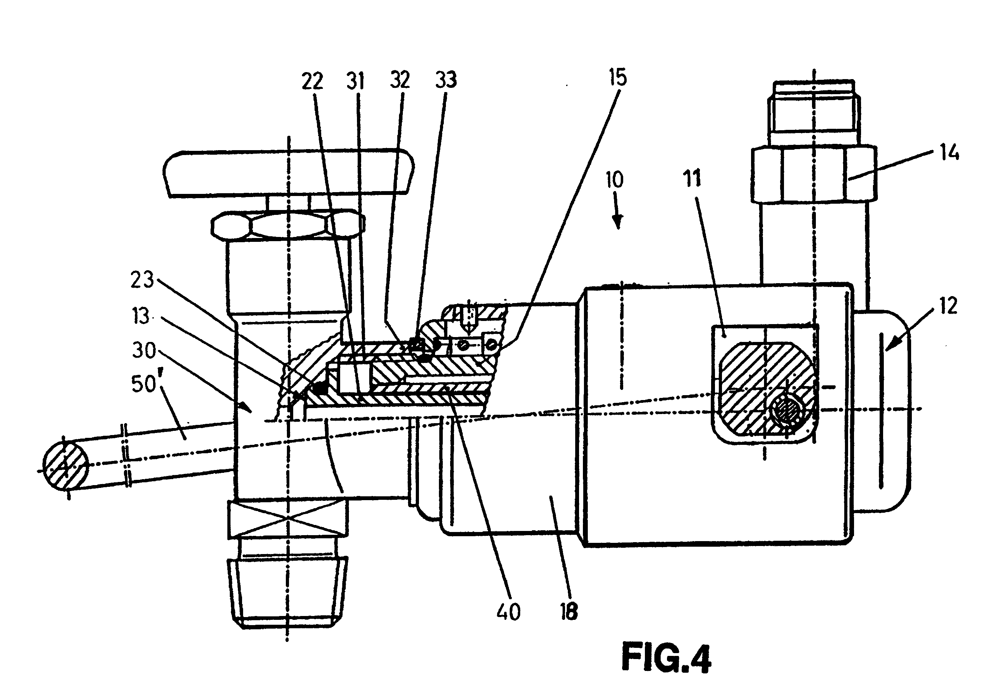

Hierbei ist auch die konische Gestaltung der Spitze der Schiebehülse 40 von Bedeutung, da durch das zum Auslaß 13 hin weisende Ende bzw. Kopfstück 40' die Aufspreizbewegung der Spannzangen 15 unterstützt wird, so daß das Ankuppeln der Schnellanschlußkupplung 10 praktisch kraftfrei erfolgt und somit Beschädigungen des Eingriffsprofils 17 bzw. des Anschlußprofiles 31 vermieden werden. Die Schiebehülse 40 erlaubt zudem ein sicheres Aufstecken der Schnellanschlußkupplung 10 auf den Anschlußnippel 30, wobei die als Verriegelungselemente bevorzugten Spannzangen 15 erst geschlossen werden, wenn der Dichtkontakt zwischen Dichtfläche 32 bzw. Dichtung 33 in Fig. 4 und Dichtring 23 sichergestellt ist, da die Schließstellung des Rückschlagventils 25 so lange aufrechterhalten wird, bis von der Axialverschiebung des Dichtkolbens 22 und der hieraus abgeleiteten Freigabe der Schiebehülse 40 in direkter Reihenfolge die Spannzangen 15 verriegelt werden, um somit sehr rasch und besonders sicher den Anschluß herzustellen. Das Kopfstück 40' der Schiebehülse ist in Anpassung an verschiedene Spannzangenformen oder deren Innenflächen 15' bevorzugt austauschbar an der Schiebehülse 40 befestigt.

In Fig. 3 und 4 ist eine weitere abgewandelte Ausführung speziell für Gasflaschenventile gezeigt, wobei gleichwirkende Bauteile mit gleichen Bezugszeichen bezeichnet sind. Als Betätigungsvorrichtung ist hierbei ein Handhebel 50' vorgesehen, der auf einen nicht näher beschriebenen Exzenter wirkt, wie aus dem eingangs genannten Stand der Technik bekannt.

## Patentansprüche

1. Schnellanschlußkupplung für die Übertragung von gasförmigen und/oder flüssigen Fluiden, insbesondere zum Füllen von Gasbehältern, umfassend:
- ein rohrförmiges Gehäuse (11);
- am Gehäuse (11) befestigte, spreizbare Verriegelungselemente, insbesondere Spannzangen (15) mit einem Eingriffsprofil (17) zum Anschluß an einen korrespondierend ausgebildeten Anschluß (30), wobei in gekuppelter Position der Schnellanschlußkupplung (10) die Verriegelungselemente von einer axial verschiebbaren Schiebehülse (40) in Verriegelungsstellung arretiert werden ; und
- einem zentral im Gehäuse gleitend verschiebbaren Dichtkolben (22) zur Anlage an den Anschluß (30);
**dadurch gekennzeichnet, daß**
die Schiebehülse (40) dem Dichtkolben (22) zwischen und den Verriegelungselementen angeordnet ist.

2. Schnellanschlußkupplung nach Anspruch 1,
**dadurch gekennzeichnet, daß**
eine auf den Dichtkolben (22) und/oder die Schiebehülse (40) wirkende Druckfeder (19, 29) vorgesehen ist.

3. Schnellanschlußkupplung nach Anspruch 1 oder 2,
**dadurch gekennzeichnet, daß**
zwischen dem Dichtkolben (22) und der Schiebehülse (40) ein Dichtring (26) vorgesehen ist.

4. Schnellanschlußkupplung nach einem der Ansprüche 1 bis 3,
**dadurch gekennzeichnet, daß**
die Schiebehülse (40) an der Innenfläche des Gehäuses (11) geführt ist.

5. Schnellanschlußkupplung nach einem der Ansprüche 1 bis 4,
**dadurch gekennzeichnet, daß**
die Schiebehülse (40) und/oder der Dichtkolben (22) eine Kolben-Ringfläche (42, 22a) mit einer größeren wirksamen Fläche aufweist als die axial gegenüberliegende Kolbenfläche.

6. Schnellanschlußkupplung nach einem der Ansprüche 1 bis 5,
**dadurch gekennzeichnet, daß**
der Dichtkolben (22) und ein damit verbundenes Rückschlagventil (25) in der Schiebehülse (40) geführt sind.

7. Schnellanschlußkupplung nach Anspruch 6,
**dadurch gekennzeichnet, daß**
das Rückschlagventil (25) einstückig mit dem Dichtkolben (22) ausgebildet ist.

8. Schnellanschlußkupplung nach Anspruch 6,
**dadurch gekennzeichnet, daß**
der Dichtkolben (22) mittels eines Kugelgelenkes am Rückschlagventil (25) schwenkbar gelagert ist.

9. Schnellanschlußkupplung nach einem der Ansprüche 1 bis 8,
**dadurch gekennzeichnet, daß**
die Schiebehülse (40) ein austauschbares Kopfstück (40') aufweist.

10. Schnellanschlußkupplung nach einem der Ansprüche 1 bis 9,
**dadurch gekennzeichnet, daß**
die Verriegelungselemente (15) als Rastkugeln oder Raststifte ausgebildet sind, die von der Schiebehülse (40) bei deren Axialverschiebung radial spreizbar sind.

## Claims

1. A quick connect coupling for transmitting gaseous and/or liquid fluids, especially for filling gas tanks, comprising:
- a tubular housing (11);
- spreadable locking elements fixed on the housing (11), especially collet jaws (15) with an engagement profile (17) for connection to a correspondingly formed connector (30)
wherein in the coupled position of the quick connect coupling (10) the locking elements are retained in the locking position by an axially movable sliding sleeve (40); and
- a sealing piston (22) slidable centrally in the housing for engagement with the connector (30);
**characterized in that**
the sliding sleeve (40) is arranged between the sealing piston (22) and the locking elements.

2. A quick connect coupling according to claim 1, **characterized in that** a compression spring (19, 29) acting on the sealing piston (22) and/or the sliding sleeve (40) is provided.

3. A quick connect coupling according to claim 1 or 2, **characterized in that** a sealing ring (26) is provided between the sealing piston (22) and the sliding sleeve (40).

4. A quick connect coupling according to any of claims 1 to 3, **characterized in that** the sliding sleeve (40) is guided on the inner surface of the housing (11).

5. A quick connect coupling according to any of claims 1 to 4, **characterized in that** the sliding sleeve (40) and/or the sealing piston (22) has a piston annular surface (42, 22a) with a greater effective area than the axially opposed piston surface.

6. A quick connect coupling according to any of claims 1 to 5, **characterized in that** the sealing piston (22) and a check valve (25) connected thereto are guided in the sliding sleeve (40).

7. A quick connect coupling according to claim 6, **characterized in that** the check valve (25) is formed in one piece with the sealing piston (22).

8. A quick connect coupling according to claim 6, **characterized in that** the sealing piston (22) is pivotally mounted on the check valve (25) by means of a ball joint.

9. A quick connect coupling according to any of claims 1 to 8, **characterized in that** the sliding sleeve (40) has an interchangeable head piece (40').

10. A quick connect coupling according to any of claims 1 to 9, **characterized in that** the locking elements (15) are in the form of detent balls or detent pins, which can be spread radially by the sliding sleeve (40) through its axial displacement.

## Revendications

1. Accouplement à connexion rapide pour le transfert de fluides gazeux et/ou liquides, notamment en vue de l'emplissage de conteneurs de gaz, comprenant :
- un boîtier tubulaire (11) ;
- des éléments écartables de verrouillage fixés au boîtier (11), en particulier des mors de serrage (15) munis d'un profil (17) de venue en prise pour le raccordement à un raccord (30) de réalisation correspondante, lesdits éléments de verrouillage étant arrêtés en position de verrouillage, dans la position accouplée de l'accouplement (10) à connexion rapide, par une douille coulissante (40) pouvant coulisser axialement ; et
- un piston d'étanchement (22) pouvant coulisser centralement dans le boîtier et conçu pour venir s'appliquer contre le raccord (30) ;
**caractérisé par le fait que** la douille coulissante (40) est interposée entre le piston d'étanchement (22) et les éléments de verrouillage.

2. Accouplement à connexion rapide selon la revendication 1,
**caractérisé par le fait**
**qu'**il est prévu un ressort de pression (19, 29) agissant sur le piston d'étanchement (22) et/ou sur la douille coulissante (40).

3. Accouplement à connexion rapide selon la revendication 1 ou 2,
**caractérisé par le fait**
**qu'**une bague d'étanchement (26) est prévue entre le piston d'étanchement (22) et la douille coulissante (40).

4. Accouplement à connexion rapide selon l'une des revendications 1 à 3,
**caractérisé par le fait**
**que** la douille coulissante (40) est guidée à la face interne du boîtier (11).

5. Accouplement à connexion rapide selon l'une des revendications 1 à 4,
**caractérisé par le fait**
**que** la douille coulissante (40) et/ou le piston d'étanchement (22) présente une face annulaire (42, 22a) de piston, qui est munie d'une plus grande surface opérante que la face de piston située axialement à l'opposé.

6. Accouplement à connexion rapide selon l'une des revendications 1 à 5,
**caractérisé par le fait**
**que** le piston d'étanchement (22), et un clapet antiretour (25) relié à ce dernier, sont guidés dans la douille coulissante (40).

7. Accouplement à connexion rapide selon la revendication 6,
**caractérisé par le fait**
**que** le clapet antiretour (25) est réalisé d'un seul tenant avec le piston d'étanchement (22).

8. Accouplement à connexion rapide selon la revendication 6,
**caractérisé par le fait**
**que** le piston d'étanchement (22) est monté à pivotement sur-le clapet antiretour (25), au. moyen d'une articulation sphérique.

9. Accouplement à connexion rapide selon l'une des revendications 1 à 8,
**caractérisé par le fait**
**que** la douille coulissante (40) présente une pièce frontale (40') remplaçable.

10. Accouplement à connexion rapide selon l'une des revendications 1 à 9,
**caractérisé par le fait**
**que** les éléments de verrouillage (15) sont réalisés sous la forme de billes encliquetables ou de chevilles encliquetables pouvant être écartées radialement par la douille coulissante (40), lors du coulissement axial de cette dernière.
